# EUROPEAN PATENT APPLICATION

(11) **EP 4 475 286 A1**
(43) Date of publication of application: **11.12.2024**
(21) Application number: 24173432.6
(22) Date of filing: 30.04.2024
(51) Int. Cl.: H01M 50/103, H01M 50/176, H01M 50/533, H01M 50/538, H01M 50/548, H01M 50/553, H01M 50/536

(54) **SECONDARY BATTERY AND METHOD OF MANUFACTURING SAME**

(30) Priority: 08.06.2023 JP 2023094753
(71) Applicant: Prime Planet Energy & Solutions, Inc., Chuo-ku Tokyo 103-0022 (JP)
(72) Inventor: TADA, Naoya, Tokyo, 103-0022 (JP)
(74) Representative: Kuhnen & Wacker Patent- und Rechtsanwaltsbüro PartG mbB

(57) **Abstract**

A method of manufacturing a secondary battery includes: inserting an electrode assembly (200) into a case main body (110) from the second end portion side of the electrode assembly (200) through a first opening (111) after joining a second electrode tab group (220A) to a first conductive member (321); electrically connecting a second electrode terminal (132) and the second electrode tab group (220A) to each other, a second electrode terminal (132) being provided on a second sealing plate (122); sealing the first opening (111) with the a sealing plate (121) after electrically connecting a first electrode terminal (131) and a first electrode tab group (210A) to each other; and sealing a second opening (112) with the second sealing plate (122) after electrically connecting the second electrode terminal (132) and the second electrode tab group (220A) to each other.

## Description

### CROSS REFERENCE TO RELATED APPLICATIONS

This nonprovisional application is based on Japanese Patent Application No. 2023-094753 filed on June 8, 2023 with the Japan Patent Office, the entire contents of which are hereby incorporated by reference.

### BACKGROUND OF THE INVENTION

### Field of the Invention

The present technology relates to a secondary battery and a method of manufacturing the secondary battery.

### Description of the Background Art

Japanese Patent No. 4537353 discloses a prismatic secondary battery in which an electrode group (25) is accommodated in a case (14) provided with openings (14a, 14b) at both ends thereof and electrode terminals (21, 23) are respectively attached to cap plates (33, 33') that seal the openings (14a, 14b).

### SUMMARY OF THE INVENTION

For example, when storing the electrode group (25) into the case (14) provided with the openings (14a, 14b) at the both ends in manufacturing the secondary battery described in Japanese Patent No. 4537353, the electrode tab group on the tip side in the insertion direction may hinder the insertion. Further, unintended deformation may occur in the electrode tab group. From the viewpoint of stably and efficiently manufacturing a secondary battery having high reliability, the battery described in Japanese Patent No. 4537353 has room for further improvement.

From a viewpoint different from the one described above, further improvement of the energy density of a secondary battery has been required. From the viewpoint of improving the energy density, the battery described in Japanese Patent No. 4537353 has room for further improvement.

It is an object of the present technology to provide: a secondary battery that has high energy density and high reliability and that can be stably and efficiently manufactured; and a method of manufacturing the secondary battery.

The present technology provides the following secondary battery and the following method of manufacturing the secondary battery.
[1] A method of manufacturing a secondary battery, the method comprising: preparing a case main body provided with a first opening and a second opening facing the first opening; producing an electrode assembly including a first electrode and a second electrode having a polarity different from a polarity of the first electrode, the electrode assembly having a first electrode tab group located at a first end portion of the electrode assembly and electrically connected to the first electrode, the electrode assembly having a second electrode tab group located at a second end portion of the electrode assembly and electrically connected to the second electrode, the second end portion being located opposite to the first end portion; electrically connecting a first electrode terminal and the first electrode tab group to each other, the first electrode terminal being provided on a first sealing plate; joining the second electrode tab group to a first conductive member; inserting the electrode assembly into the case main body from the second end portion side of the electrode assembly through the first opening after joining the second electrode tab group to the first conductive member; electrically connecting a second electrode terminal and the second electrode tab group to each other, the second electrode terminal being provided on a second sealing plate; sealing the first opening with the first sealing plate after electrically connecting the first electrode terminal and the first electrode tab group to each other; and sealing the second opening with the second sealing plate after electrically connecting the second electrode terminal and the second electrode tab group to each other.
[2] The method of manufacturing the secondary battery according to [1], wherein the electrically connecting of the second electrode terminal and the second electrode tab group includes electrically connecting the first conductive member and the second electrode terminal to each other after inserting the electrode assembly into the case main body.
[3] The method of manufacturing the secondary battery according to [2], wherein the electrically connecting of the first conductive member and the second electrode terminal includes joining the first conductive member to a second conductive member attached to the second sealing plate.
[4] The method of manufacturing the secondary battery according to any one of [1] to [3], wherein the electrically connecting of the first electrode terminal and the first electrode tab group includes joining the first electrode tab group to a third conductive member before inserting the electrode assembly into the case main body.
[5] The method of manufacturing the secondary battery according to [4], wherein the electrically connecting of the first electrode terminal and the first electrode tab group includes electrically connecting the third conductive member and the first electrode terminal to each other before inserting the electrode assembly into the case main body.
[6] The method of manufacturing the secondary battery according to [5], wherein the electrically connecting of the third conductive member and the first electrode terminal includes joining the third conductive member to a fourth conductive member attached to the first sealing plate.
[7] The method of manufacturing the secondary battery according to any one of [4] to [6], wherein the first electrode tab group has a bent portion, and a tip side of the first electrode tab group with respect to the bent portion is joined to the third conductive member, and a region of the third conductive member joined to the first electrode tab group is disposed along the first sealing plate.
[8] The method of manufacturing the secondary battery according to any one of [1] to [7], wherein the second electrode tab group has a bent portion, and a tip side of the second electrode tab group with respect to the bent portion is joined to the first conductive member, and a region of the first conductive member joined to the second electrode tab group is disposed along the second sealing plate.
[9] The method of manufacturing the secondary battery according to any one of [1] to [8], further comprising covering, with an electrode assembly holder having an insulating property, the electrode assembly before being inserted into the case main body.
[10] A secondary battery comprising: an electrode assembly including a first electrode and a second electrode having a polarity different from a polarity of the first electrode, the electrode assembly having a first electrode tab group located at a first end portion of the electrode assembly and electrically connected to the first electrode, the electrode assembly having a second electrode tab group located at a second end portion of the electrode assembly and electrically connected to the second electrode, the second end portion being located opposite to the first end portion; a case that accommodates the electrode assembly; a first electrode terminal and a second electrode terminal each provided on the case; a first current collector that is accommodated in the case and that electrically connects the first electrode and the first electrode terminal to each other; and a second current collector that is accommodated in the case and that electrically connects the second electrode and the second electrode terminal to each other, wherein the case includes a case main body provided with a first opening and a second opening facing the first opening, a first sealing plate that is provided with the first electrode terminal and that seals the first opening, and a second sealing plate that is provided with the second electrode terminal and that seals the second opening, the first electrode tab group has a first bent portion, and a tip side of the first electrode tab group with respect to the first bent portion is joined to the first current collector, the second electrode tab group has a second bent portion, and a tip side of the second electrode tab group with respect to the second bent portion is joined to the second current collector, a region of the first current collector joined to the first electrode tab group is disposed along the first sealing plate, and a region of the second current collector joined to the second electrode tab group is disposed along the second sealing plate.
[11] The secondary battery according to [10], wherein the first sealing plate has a substantially rectangular shape constituted of a pair of long sides and a pair of short sides shorter than the pair of long sides, the first current collector includes a first component joined to the first electrode tab group, and a second component that electrically connects the first component and the first electrode terminal to each other, the first component includes a first region, a second region, and a stepped portion formed between the first region and the second region along the pair of long sides, and the first electrode tab group is joined to the first region, and the second region is disposed to overlap with the second component.
[12] The secondary battery according to [10], wherein the second sealing plate has a substantially rectangular shape constituted of a pair of long sides and a pair of short sides shorter than the pair of long sides, the second current collector includes a first component joined to the second electrode tab group, and a second component that electrically connects the first component and the second electrode terminal to each other, the first component includes a first region, a second region, and a stepped portion formed between the first region and the second region along the pair of long sides, and the second electrode tab group is joined to the first region, and the second region is disposed to overlap with the second component.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a front view of a secondary battery.
Fig. 2 is a diagram showing a state in which the secondary battery shown in Fig. 1 is viewed in a direction of arrow II.
Fig. 3 is a diagram showing a state in which the secondary battery shown in Fig. 1 is viewed in a direction of arrow III.
Fig. 4 is a diagram showing a state in which the secondary battery shown in Fig. 1 is viewed in a direction of arrow IV.
Fig. 5 is a front cross sectional view of the secondary battery shown in Fig. 1.
Fig. 6 is a front view showing a negative electrode raw plate before a negative electrode plate is formed.
Fig. 7 is a cross sectional view of the negative electrode raw plate shown in Fig. 6 along VII-VII.
Fig. 8 is a front view showing the negative electrode plate formed from the negative electrode raw plate.
Fig. 9 is a front view showing a positive electrode raw plate before a positive electrode plate is formed.
Fig. 10 is a cross sectional view of the positive electrode raw plate shown in Fig. 9 along X-X.
Fig. 11 is a front view showing the positive electrode plate formed from the positive electrode raw plate.
Fig. 12 is a diagram showing an electrode assembly and a current collector each removed from the secondary battery.
Fig. 13 is a diagram showing a connection structure between the negative electrode tab group and the negative electrode current collector.
Fig. 14 is a front view of the connection structure shown in Fig. 13.
Fig. 15 is a cross sectional view of the connection structure shown in Fig. 13. Fig. 16 is a diagram showing a step of inserting the electrode assembly into a case main body.
Fig. 17 is a diagram showing a step of disposing a spacer between a sealing plate and the electrode assembly.
Fig. 18 is a cross sectional view showing a state in which the spacer is disposed between the sealing plate and the electrode assembly.
Fig. 19 is a diagram showing a connection structure between a positive electrode tab group and a positive electrode current collector.
Fig. 20 is a cross sectional view of the connection structure shown in Fig. 19.
Fig. 21 is a flowchart showing each step of a method of manufacturing the secondary battery.

### DESCRIPTION OF THE PREFERRED EMBODIMENTS

Hereinafter, embodiments of the present technology will be described. It should be noted that the same or corresponding portions are denoted by the same reference characters, and may not be described repeatedly.

It should be noted that in the embodiments described below, when reference is made to number, amount, and the like, the scope of the present technology is not necessarily limited to the number, amount, and the like unless otherwise stated particularly. Further, in the embodiments described below, each component is not necessarily essential to the present technology unless otherwise stated particularly. Further, the present technology is not limited to one that necessarily exhibits all the functions and effects stated in the present embodiment.

It should be noted that in the present specification, the terms "comprise", "include", and "have" are open-end terms. That is, when a certain configuration is included, a configuration other than the foregoing configuration may or may not be included.

Also, in the present specification, when geometric terms and terms representing positional/directional relations are used, for example, when terms such as "parallel", "orthogonal", "obliquely at 45°", "coaxial", and "along" are used, these terms permit manufacturing errors or slight fluctuations. In the present specification, when terms representing relative positional relations such as "upper side" and "lower side" are used, each of these terms is used to indicate a relative positional relation in one state, and the relative positional relation may be reversed or turned at any angle in accordance with an installation direction of each mechanism (for example, the entire mechanism is reversed upside down).

In the present specification, the term "battery" is not limited to a lithium ion battery, and may include other batteries such as a nickel-metal hydride battery and a sodium-ion battery. In the present specification, the term "electrode" may collectively represents a positive electrode and a negative electrode. Further, the term "electrode plate" may collectively represent a positive electrode plate and a negative electrode plate.

### (Overall Configuration of Battery)

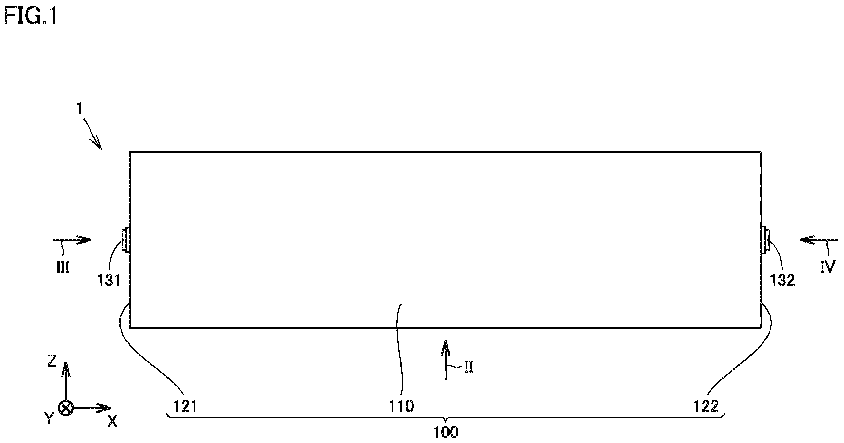

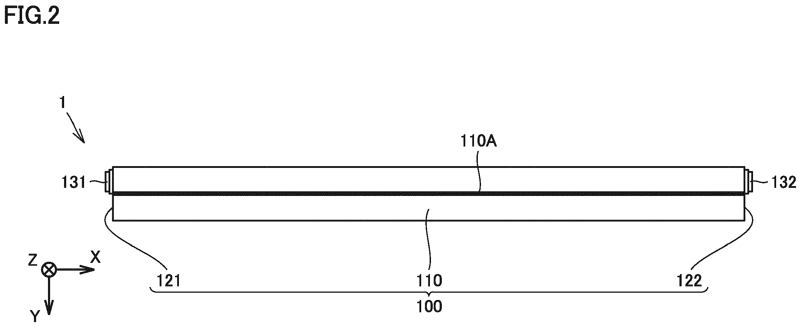

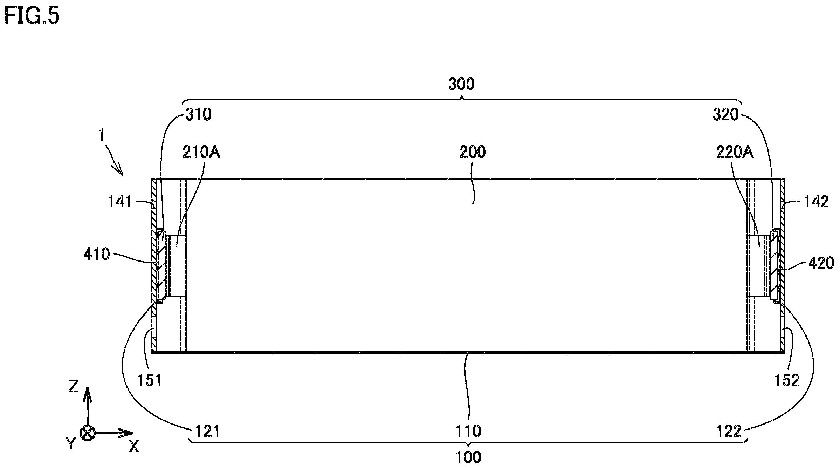

Fig. 1 is a front view of a secondary battery 1 according to the present embodiment. Figs. 2 to 4 are diagrams showing states of secondary battery 1 shown in Fig. 1 when viewed in directions of arrows 11, III, and IV, respectively. Fig. 5 is a front cross sectional view of secondary battery 1 shown in Fig. 1.

Secondary battery 1 can be mounted on a battery electric vehicle (BEV), a plug-in hybrid electric vehicle (PHEV), a hybrid electric vehicle (HEV), or the like. It should be noted that the purpose of use of secondary battery 1 is not limited to the use on a vehicle.

As shown in Figs. 1 to 5, secondary battery 1 includes an exterior package 100, an electrode assembly 200, and current collectors 300. Exterior package 100 includes a case main body 110, a sealing plate 121 (first sealing plate), and a sealing plate 122 (second sealing plate).

In the specification of the present application, an X axis direction (first direction) shown in Figs. 1 to 5 may be referred to as a "width direction" of secondary battery 1 or case main body 110, a Y axis direction (second direction) may be referred to as a "thickness direction" of secondary battery 1 or case main body 110, and a Z direction (third direction) may be referred to as a "height direction" of secondary battery 1 or case main body 110.

When forming a battery assembly including secondary battery 1, a plurality of secondary batteries 1 are stacked in the thickness direction of each of the plurality of secondary batteries 1. Secondary batteries 1 stacked may be restrained in the stacking direction (Y axis direction) by a restraint member to form a battery module, or the battery assembly may be directly supported by a side surface of a case of a battery pack without using the restraint member.

Case main body 110 is constituted of a member having a tubular shape, preferably, a prismatic tubular shape. Thus, secondary battery 1 having a prismatic shape is obtained. Case main body 110 is composed of a metal. Specifically, case main body 110 is composed of aluminum, an aluminum alloy, iron, an iron alloy, or the like.

As shown in Figs. 1 and 2, sealing plates 121, 122 are provided at respective end portions of the case main body. Case main body 110 can be formed to have a prismatic tubular shape in, for example, the following manner: end sides of a plate-shaped member having been bent are brought into abutment with each other (joining portion 110A illustrated in Fig. 2) and are joined together (for example, laser welding). Each of the corners of the "prismatic tubular shape" may have a shape with a curvature.

In the present embodiment, case main body 110 is formed to be longer in the width direction (X axis direction) of secondary battery 1 than in each of the thickness direction (Y axis direction) and the height direction (Z axis direction) of secondary battery 1. The size (width) of case main body 110 in the X axis direction is preferably about 30 cm or more. In this way, secondary battery 1 can be formed to have a relatively large size (high capacity). The size (height) of case main body 110 in the Z axis direction is preferably about 20 cm or less, more preferably about 15 cm or less, and further preferably about 10 cm or less. Thus, (low-height) secondary battery 1 having a relatively low height can be formed, thus resulting in improved ease of mounting on a vehicle, for example.

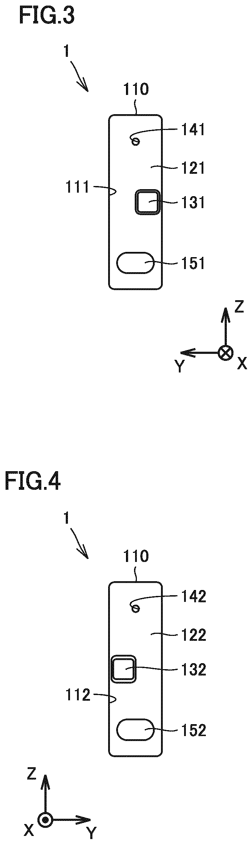

As shown in Fig. 3, an opening 111 (first opening) is provided at one end portion of case main body 110. Opening 111 is sealed with sealing plate 121. Sealing plate 121 is provided with a negative electrode terminal 131 (first electrode terminal), an injection hole 141, and a gas-discharge valve 151. The positions of negative electrode terminal 131, injection hole 141, and gas-discharge valve 151 can be appropriately changed. Each of opening 111 and sealing plate 121 has a substantially rectangular shape in which the Y axis direction corresponds to its short-side direction and the Z axis direction corresponds to its long-side direction.

As shown in Fig. 4, an opening 112 (second opening) is provided at the other end portion of case main body 110. Opening 112 is sealed with sealing plate 122. Sealing plate 122 is provided with a positive electrode terminal 132 (second electrode terminal), an injection hole 142, and a gas-discharge valve 152. The positions of positive electrode terminal 132, injection hole 142, and gas-discharge valve 152 can be appropriately changed. Each of opening 112 and sealing plate 122 has a substantially rectangular shape in which the Y axis direction corresponds to its short-side direction and the Z axis direction corresponds to its long-side direction.

Each of sealing plates 121, 122 is composed of a metal. Specifically, each of sealing plates 121, 122 is composed of aluminum, an aluminum alloy, iron, an iron alloy, or the like.

Negative electrode terminal 131 is electrically connected to a negative electrode of electrode assembly 200. Positive electrode terminal 132 is electrically connected to a positive electrode of electrode assembly 200.

Negative electrode terminal 131 is composed of a conductive material (more specifically, a metal), and can be composed of copper, a copper alloy, or the like, for example. A portion or layer composed of aluminum or an aluminum alloy may be provided at a portion of an outer surface of negative electrode terminal 131.

Positive electrode terminal 132 is composed of a conductive material (more specifically, a metal), and can be composed of aluminum, an aluminum alloy, or the like, for example.

Each of injection holes 141, 142 is sealed with a sealing member (not shown). As the sealing member, for example, a blind rivet or another metal member can be used.

Each of gas-discharge valves 151, 152 is fractured to discharge a gas in exterior package 100 to outside when pressure in exterior package 100 becomes equal to or more than a predetermined value.

Electrode assembly 200 is an electrode assembly having a flat shape and having a below-described positive electrode plate and a below-described negative electrode plate. Specifically, electrode assembly 200 is a wound type electrode assembly in which a strip-shaped positive electrode plate and a strip-shaped negative electrode plate are both wound with a strip-shaped separator (not shown) being interposed therebetween. It should be noted that in the present specification, the "electrode assembly" is not limited to the wound type electrode assembly, and may be a stacked type electrode assembly in which a plurality of positive electrode plates and a plurality of negative electrode plates are alternately stacked. The electrode assembly may include a plurality of positive electrode plates and a plurality of negative electrode plates, respective positive electrode tabs provided in the positive electrode plates may be stacked to form a positive electrode tab group, and respective negative electrode tabs provided in the negative electrode plates may be stacked to form a negative electrode tab group.

As shown in Fig. 5, exterior package 100 accommodates electrode assembly 200. Electrode assembly 200 is accommodated in exterior package 100 such that the winding axis thereof is parallel to the X axis direction.

Specifically, one or a plurality of the wound type electrode assemblies and an electrolyte solution (electrolyte) (not shown) are accommodated inside a below-described insulating sheet 600 disposed in exterior package 100. As the electrolyte solution (non-aqueous electrolyte solution), it is possible to use, for example, a solution obtained by dissolving LiPF₆ at a concentration of 1.2 mol/L in a non-aqueous solvent obtained by mixing ethylene carbonate (EC), ethyl methyl carbonate (EMC), and diethyl carbonate (DEC) at a volume ratio (25°C) of 30:30:40. It should be noted that instead of the electrolyte solution, a solid electrolyte may be used.

Electrode assembly 200 includes: a negative electrode tab group 210A (first electrode tab group) provided at an end portion (first end portion) thereof on the sealing plate 121 side; and a positive electrode tab group 220A (second electrode tab group) provided at an end portion (second end portion) thereof on the sealing plate 122 side. Negative electrode tab group 210A and positive electrode tab group 220A are connected to the negative electrode and positive electrode of electrode assembly 200, respectively. Negative electrode tab group 210A and positive electrode tab group 220A are formed to protrude toward sealing plates 121, 122 respectively from a main body portion (a portion in which the positive electrode plate and the negative electrode plate are stacked with a separator being interposed therebetween) of electrode assembly 200.

Current collectors 300 include negative electrode current collector 310 (first current collector) and a positive electrode current collector 320 (second current collector). Each of negative electrode current collector 310 and positive electrode current collector 320 is constituted of a plate-shaped member. Electrode assembly 200 is electrically connected to negative electrode terminal 131 and positive electrode terminal 132 through current collectors 300.

Negative electrode current collector 310 is disposed on sealing plate 121 with an insulating member 410 composed of a resin being interposed therebetween. Negative electrode current collector 310 is electrically connected to negative electrode tab group 210A and negative electrode terminal 131. Negative electrode current collector 310 is composed of a conductive material (more specifically, a metal), and can be composed of copper, a copper alloy, or the like, for example.

Positive electrode current collector 320 is disposed on sealing plate 122 with an insulating member 420 composed of a resin being interposed therebetween. Positive electrode current collector 320 is electrically connected to positive electrode tab group 220A and positive electrode terminal 132. Positive electrode current collector 320 is composed of a conductive material (more specifically, a metal), and can be composed of aluminum, an aluminum alloy, or the like, for example. It should be noted that positive electrode tab group 220A may be electrically connected to sealing plate 122 directly or via positive electrode current collector 320. In this case, sealing plate 122 may serve as positive electrode terminal 132.

### (Configuration of Electrode Assembly 200)

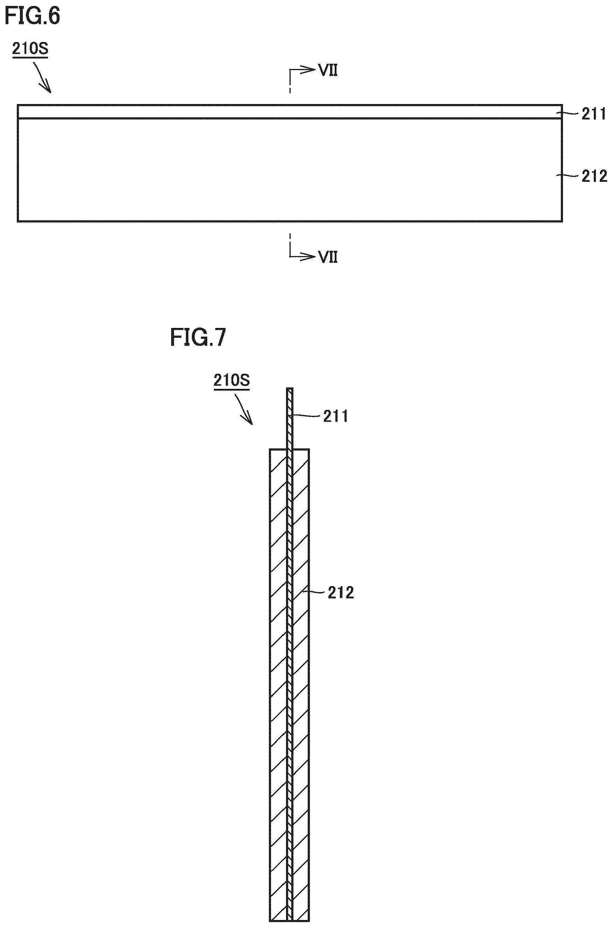

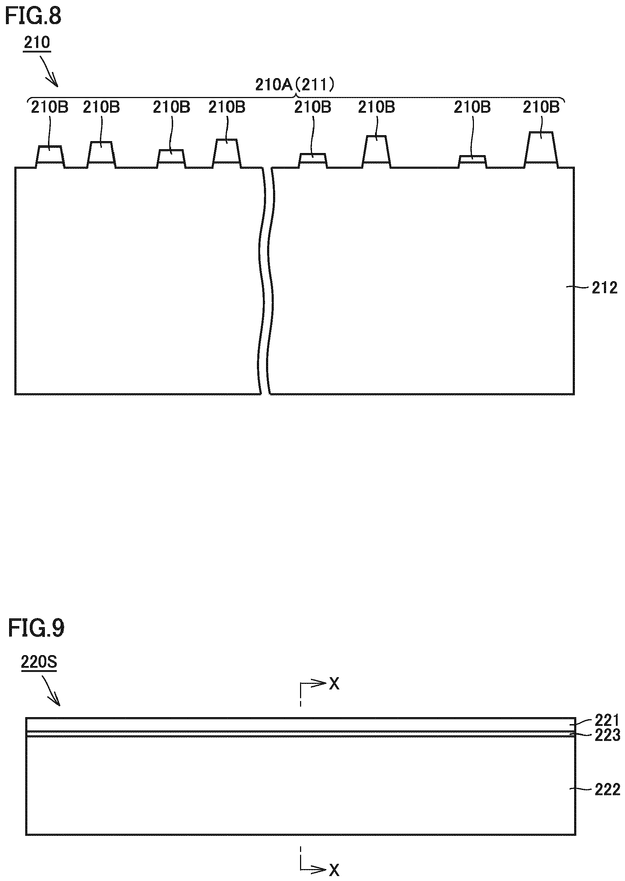

Fig. 6 is a front view showing a negative electrode raw plate 210S before negative electrode plate 210 (first electrode) is formed, Fig. 7 is a cross sectional view of negative electrode raw plate 210S shown in Fig. 6 along VII-VII, and Fig. 8 is a front view showing negative electrode plate 210 formed from negative electrode raw plate 210S.

Negative electrode plate 210 is manufactured by processing negative electrode raw plate 210S. As shown in Figs. 6 and 7, negative electrode raw plate 210S includes a negative electrode core body 211 and a negative electrode active material layer 212. Negative electrode core body 211 is a copper foil or a copper alloy foil.

Negative electrode active material layer 212 is formed on negative electrode core body 211 except for each of end portions of both surfaces of negative electrode core body 211 on one side. Negative electrode active material layer 212 is formed by applying a negative electrode active material layer slurry using a die coater.

The negative electrode active material layer slurry is produced by kneading graphite serving as a negative electrode active material, styrene-butadiene rubber (SBR) and carboxymethyl cellulose (CMC) each serving as a binder, and water serving as a dispersion medium such that the mass ratio of the graphite, the SBR, and the CMC is about 98:1:1.

Negative electrode core body 211 having the negative electrode active material layer slurry applied thereon is dried to remove the water included in the negative electrode active material layer slurry, thereby forming negative electrode active material layer 212. Further, by compressing negative electrode active material layer 212, negative electrode raw plate 210S including negative electrode core body 211 and negative electrode active material layer 212 is formed. Negative electrode raw plate 210S is cut into a predetermined shape, thereby forming negative electrode plate 210. Negative electrode raw plate 210S can be cut by laser processing with application of an energy ray, die processing, cutter processing, or the like.

As shown in Fig. 8, a plurality of negative electrode tabs 210B each constituted of negative electrode core body 211 are provided at one end portion, in the width direction, of negative electrode plate 210 formed from negative electrode raw plate 210S. When negative electrode plate 210 is wound, the plurality of negative electrode tabs 210B are stacked to form negative electrode tab group 210A. The position of each of the plurality of negative electrode tabs 210B and the length thereof in the protruding direction are appropriately adjusted in consideration of the state in which negative electrode tab group 210A is connected to negative electrode current collector 310. It should be noted that the shape of negative electrode tab 210B is not limited to the one illustrated in Fig. 8.

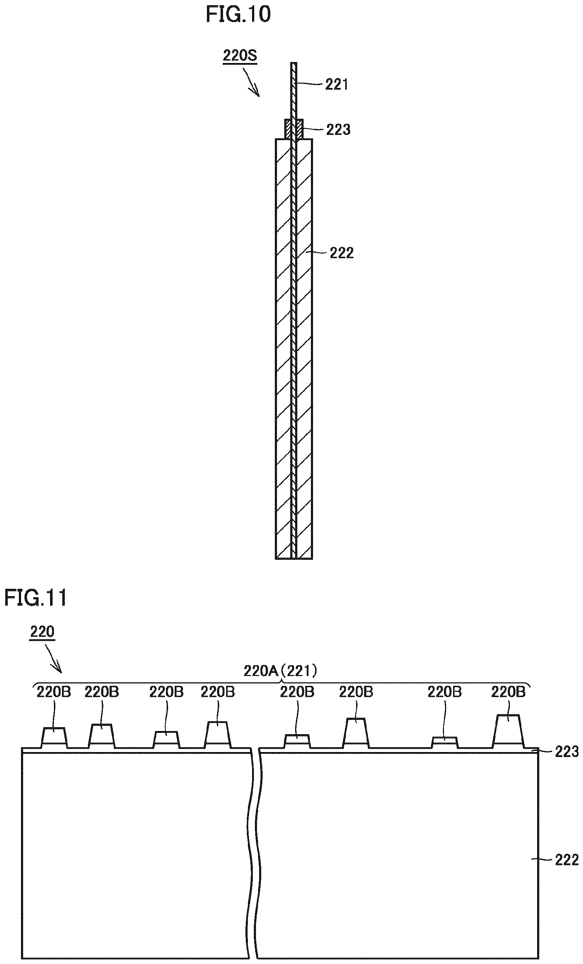

Fig. 9 is a front view showing a positive electrode raw plate 220S before positive electrode plate 220 (second electrode) is formed, Fig. 10 is a cross sectional view of positive electrode raw plate 220S shown in Fig. 9 along X-X, and Fig. 11 is a front view showing positive electrode plate 220 formed from positive electrode raw plate 220S.

Positive electrode plate 220 is manufactured by processing positive electrode raw plate 220S. As shown in Figs. 9 and 10, positive electrode raw plate 220S includes a positive electrode core body 221, a positive electrode active material layer 222, and a positive electrode protective layer 223. Positive electrode core body 221 is an aluminum foil or an aluminum alloy foil.

Positive electrode active material layer 222 is formed on positive electrode core body 221 except for each of end portions of both surfaces of positive electrode core body 221 on one side. Positive electrode active material layer 222 is formed on positive electrode core body 221 by applying a positive electrode active material layer slurry using a die coater.

The positive electrode active material layer slurry is produced by kneading a lithium-nickel-cobalt-manganese composite oxide serving as a positive electrode active material, polyvinylidene difluoride (PVdF) serving as a binder, a carbon material serving as a conductive material, and N-methyl-2-pyrrolidone (NMP) serving as a dispersion medium such that the mass ratio of the lithium-nickel-cobalt-manganese composite oxide, the PVdF, and the carbon material is about 97.5:1:1.5.

Positive electrode protective layer 223 is formed in contact with positive electrode core body 221 at an end portion of positive electrode active material layer 222 on the one side in the width direction. Positive electrode protective layer 223 is formed on positive electrode core body 221 by applying a positive electrode protective layer slurry using a die coater. Positive electrode protective layer 223 has an electrical resistance larger than that of positive electrode active material layer 222.

The positive electrode protective layer slurry is produced by kneading alumina powder, a carbon material serving as a conductive material, PVdF serving as a binder, and NMP serving as a dispersion medium such that the mass ratio of the alumina powder, the carbon material, and the PVdF is about 83:3:14.

Positive electrode core body 221 having the positive electrode active material layer slurry and the positive electrode protective layer slurry applied thereon is dried to remove the NMP included in the positive electrode active material layer slurry and the positive electrode protective layer slurry, thereby forming positive electrode active material layer 222 and positive electrode protective layer 223. Further, by compressing positive electrode active material layer 222, positive electrode raw plate 220S including positive electrode core body 221, positive electrode active material layer 222, and positive electrode protective layer 223 is formed. Positive electrode raw plate 220S is cut into a predetermined shape, thereby forming positive electrode plate 220. Positive electrode raw plate 220S can be cut by laser processing with application of an energy ray, die processing, cutter processing, or the like.

As shown in Fig. 11, a plurality of positive electrode tabs 220B each constituted of positive electrode core body 221 are provided at one end portion, in the width direction, of positive electrode plate 220 formed from positive electrode raw plate 220S. When positive electrode plate 220 is wound, the plurality of positive electrode tabs 220B are stacked to form positive electrode tab group 220A. The position of each of the plurality of positive electrode tabs 220B and the length thereof in the protruding direction are appropriately adjusted in consideration of the state in which positive electrode tab group 220A is connected to positive electrode current collector 320. It should be noted that the shape of positive electrode tab 220B is not limited to the one illustrated in Fig. 11.

Positive electrode protective layer 223 is provided at the root of each of the plurality of positive electrode tabs 220B. Positive electrode protective layer 223 may not necessarily be provided at the root of positive electrode tab 220B.

In a typical example, the thickness of (one) negative electrode tab 210B is smaller than the thickness of (one) positive electrode tab 220B. In this case, the thickness of negative electrode tab group 210A is smaller than the thickness of positive electrode tab group 220A.

### (Connection Structure between Electrode Assembly 200 and Current Collector 300)

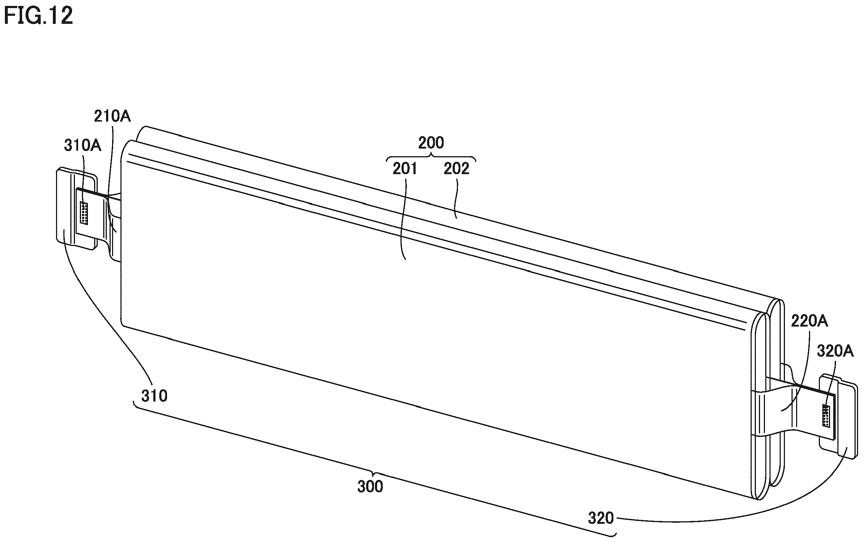

Fig. 12 is a diagram showing electrode assembly 200 and current collector 300 each removed from secondary battery 1. As shown in Fig. 12, electrode assembly 200 is formed by stacking two electrode assemblies 201, 202, each of which is a wound type electrode assembly. Although Fig. 12 illustratively shows the structure in which two wound type electrode assemblies are stacked, electrode assembly 200 may be constituted of one wound type electrode assembly, may be constituted of three or more wound type electrode assemblies, or may be constituted of a stacked type electrode assembly.

Negative electrode tab group 210A is joined to negative electrode current collector 310 at a joining portion 310A and positive electrode tab group 220A is joined to positive electrode current collector 320 at a joining portion 320A. Each of joining portions 310A, 320A can be formed by, for example, ultrasonic bonding, resistance welding, laser welding, swaging, or the like. Joining portions 310A, 320A form a conductive path between negative electrode tab group 210A and negative electrode terminal 131 and a conductive path between positive electrode tab group 220A and positive electrode terminal 132.

### (Connection Structure between Electrode Assembly 200 and Negative Electrode Current Collector 310)

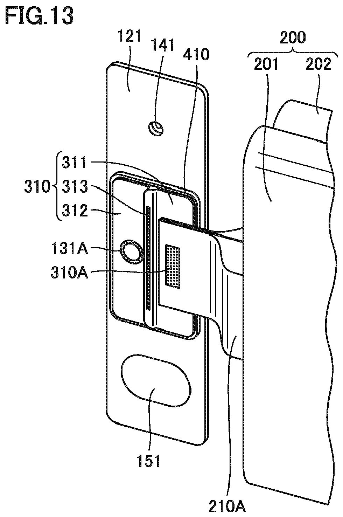

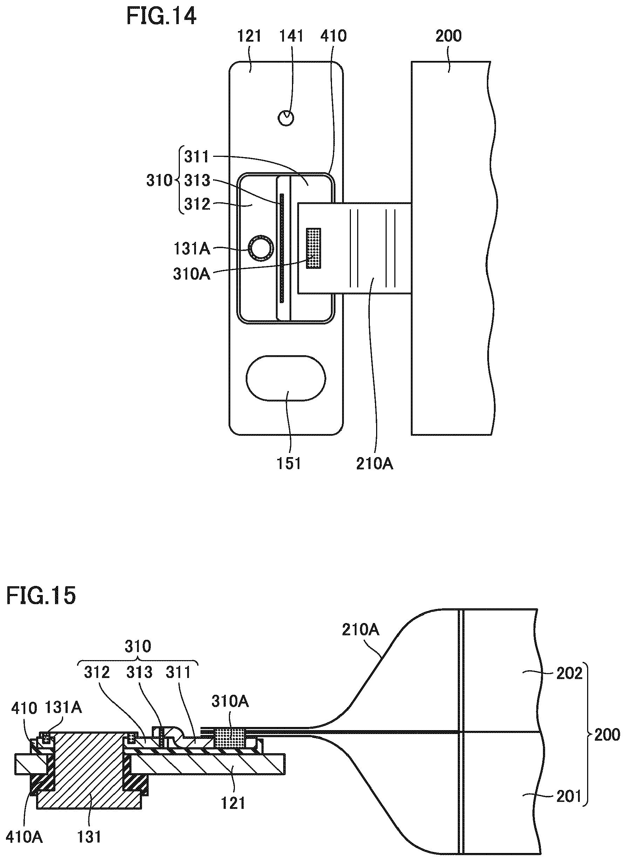

Fig. 13 is a diagram showing a connection structure between negative electrode tab group 210A and negative electrode current collector 310. Figs. 14 and 15 are respectively a front view and a cross sectional view of the connection structure shown in Fig. 13.

As shown in Figs. 13 to 15, negative electrode current collector 310 is connected to negative electrode terminal 131 between electrode assembly 200 and sealing plate 121. Negative electrode current collector 310 includes a first conductive member 311 and a second conductive member 312. First conductive member 311 and second conductive member 312 are joined to each other at a joining portion 313.

Negative electrode tab group 210A is joined to first conductive member 311 of negative electrode current collector 310 at joining portion 310A. First conductive member 311 is connected to second conductive member 312 at joining portion 313. Joining portion 313 can be formed by, for example, ultrasonic bonding, resistance welding, laser welding, swaging, or the like.

Each of first conductive member 311 and second conductive member 312 is attached to the inner surface side of sealing plate 121 with insulating member 410 composed of a resin being interposed therebetween.

Negative electrode terminal 131 is attached to sealing plate 121 with an insulating member 410A composed of a resin being interposed therebetween. Negative electrode terminal 131 is provided to be exposed to the outside of sealing plate 121 and reach second conductive member 312 of negative electrode current collector 310 provided on the inner surface side of sealing plate 121. Negative electrode terminal 131 and second conductive member 312 can be connected by ultrasonic bonding, resistance welding, laser welding, swaging, or the like, for example. In the present embodiment, negative electrode terminal 131 and second conductive member 312 are connected in the following manner: a through hole is provided in second conductive member 312, negative electrode terminal 131 is inserted into the through hole, negative electrode terminal 131 is swaged on second conductive member 312, and then the swaged portion and second conductive member 312 are welded at a joining portion 131A.

As a procedure for assembling each component, first, negative electrode terminal 131 and second conductive member 312 as well as insulating members 410, 410A are attached to sealing plate 121. Next, first conductive member 311 connected to electrode assembly 200 is attached to second conductive member 312. On this occasion, first conductive member 311 is disposed on insulating member 410 such that a portion of first conductive member 311 overlaps with second conductive member 312. Next, first conductive member 311 and second conductive member 312 are welded and connected to each other at joining portion 313. It should be noted that insulating members 410, 410A may be constituted of one member.

It should be noted that negative electrode terminal 131 may be electrically connected to sealing plate 121. Further, sealing plate 121 may serve as negative electrode terminal 131.

It should be noted that each of Figs. 13 to 15 illustrates negative electrode current collector 310 constituted of two components (first conductive member 311 and second conductive member 312); however, negative electrode current collector 310 may be constituted of one component.

### (Step of Inserting Electrode Assembly 200)

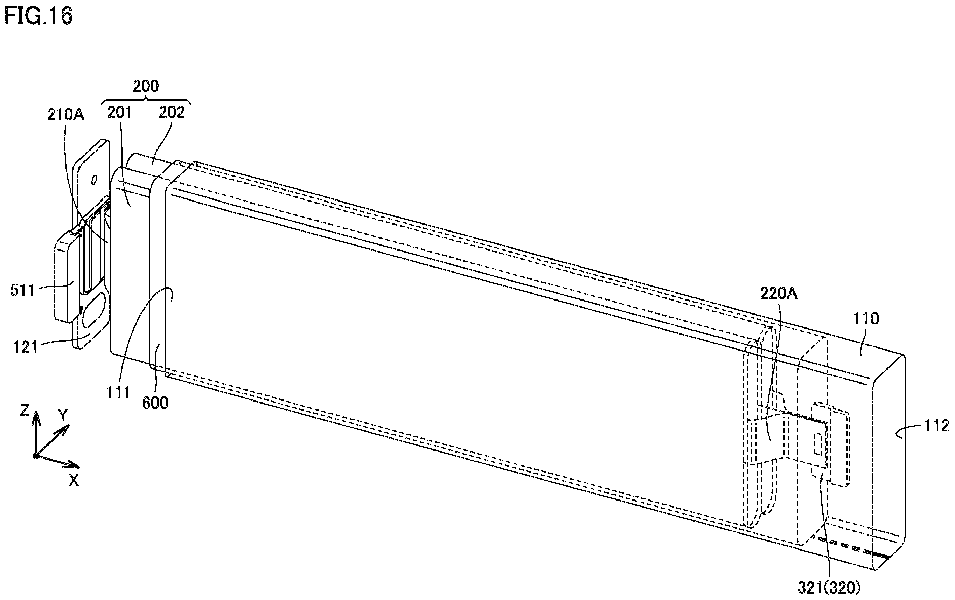

Fig. 16 is a diagram showing a step of inserting electrode assembly 200 into case main body 110. As shown in Fig. 16, insulating sheet 600 (electrode assembly holder) composed of a resin is disposed between electrode assembly 200 and case main body 110.

Insulating sheet 600 may be composed of, for example, a resin. More specifically, the material of insulating sheet 600 is, for example, polypropylene (PP), polyethylene terephthalate (PET), polyphenylene sulfide (PPS), polyimide (PI), or polyolefin (PO).

Insulating sheet 600 does not necessarily need to cover a whole of the surfaces of electrode assembly 200. Insulating sheet 600 preferably covers an area of about 50% or more, more preferably about 70% or more, of the outer surfaces of the electrode assembly. Insulating sheet 600 preferably covers a whole of at least four surfaces of the six surfaces of electrode assembly 200 having a substantially rectangular parallelepiped shape (flat shape) other than the two surfaces thereof on which negative electrode tab group 210A and positive electrode tab group 220A are formed respectively.

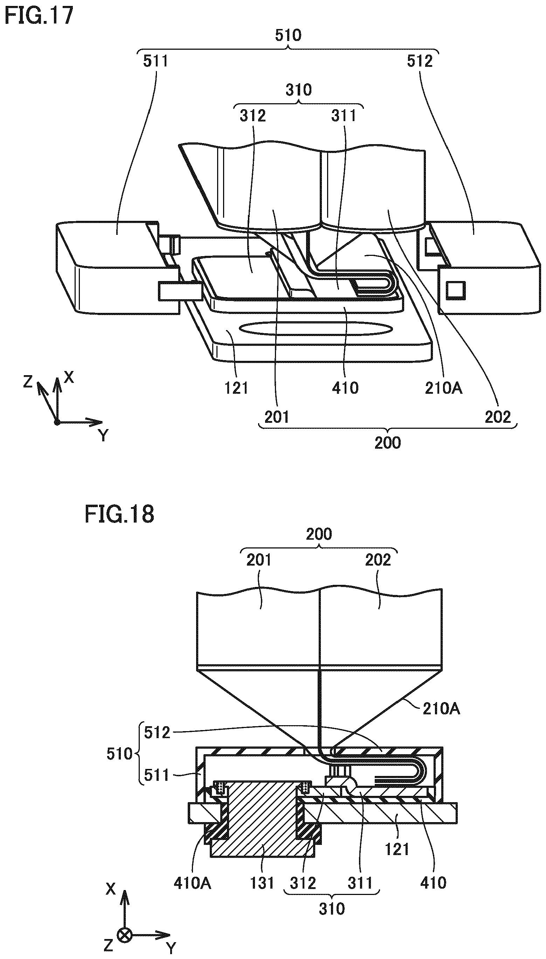

Fig. 17 is a diagram showing a step of disposing a spacer 510 between sealing plate 121 and electrode assembly 200. Fig. 18 is a cross sectional view showing a state in which spacer 510 is disposed between sealing plate 121 and electrode assembly 200.

As shown in Figs. 17 and 18, negative electrode tab group 210A extends from electrode assembly 200 toward sealing plate 121 in the following manner: negative electrode tab group 210A extends from the central portion of sealing plate 121 to an end portion of sealing plate 121 in the Y axis direction and is then bent to be folded back toward the central portion in an opposite direction. Spacer 510 is disposed to store the bent negative electrode tab group 210A (bent portion).

Spacer 510 includes a first spacer 511 and a second spacer 512. First spacer 511 and second spacer 512 are slid along the Y axis direction from the respective end portion sides to the center side of sealing plate 121, and are accordingly engaged with each other. Thus, spacer 510 is fixed to sealing plate 121 with insulating member 410 being interposed therebetween, thereby increasing stability of the position of spacer 510.

As shown in Fig. 18, spacer 510 forms an inner space for accommodating negative electrode current collector 310, and the tip portion of negative electrode tab group 210A is also accommodated in the inner space of spacer 510. Spacer 510 is provided with a hole portion through which negative electrode tab group 210A passes.

The material of spacer 510 is not particularly limited, but an insulating material such as a resin is preferably used. More specifically, it is preferable to use a sheet composed of polyolefin (PO). Further, insulating sheet 600 may be interposed between spacer 510 and electrode assembly 200.

Referring again to Fig. 16, in the method of manufacturing secondary battery 1 according to the present embodiment, after positive electrode tab group 220A is joined to first conductive member 321 of positive electrode current collector 320, electrode assembly 200 is inserted into case main body 110 from its end portion side on the positive electrode tab group 220A side.

When electrode assembly 200 is inserted into case main body 110 through opening 111, unintended deformation may occur in positive electrode tab group 220A located on the tip side. To address this, by inserting electrode assembly 200 into case main body 110 after positive electrode tab group 220A is joined to first conductive member 321 of positive electrode current collector 320, the unintended deformation of positive electrode tab group 220A can be suppressed. As a result, it is possible to stably and efficiently manufacture secondary battery 1 having high reliability.

In the example of Fig. 16, electrode assembly 200 is inserted in case main body 110 with electrode assembly 200 being covered with insulating sheet 600. Thus, electrode assembly 200 can be suppressed from being damaged at the time of insertion into case main body 110.

Further, in the example of Fig. 16, after negative electrode terminal 131 and negative electrode tab group 210A are electrically connected to each other, electrode assembly 200 is inserted into case main body 110 from its end portion side on positive electrode tab group 220A side through opening 111. When negative electrode terminal 131 attached to sealing plate 121 is electrically connected to negative electrode tab group 210A after electrode assembly 200 is inserted into case main body 110, negative electrode tab group 210A is required to have such a length that negative electrode tab group 210A of electrode assembly 200 accommodated in case main body 110 sufficiently protrudes to the outside of case main body 110. By electrically connecting negative electrode terminal 131, which is attached to sealing plate 121, and negative electrode tab group 210A before inserting electrode assembly 200 into case main body 110, the length of negative electrode tab group 210A can be reduced as compared with a case where they are connected after electrode assembly 200 is inserted into case main body 110. As a result, a volume occupation ratio of negative electrode plate 210 and positive electrode plate 220 in the inner space of case main body 110 can be increased.

Case main body 110 can be held at a predetermined angle during the step of inserting electrode assembly 200. As an example, electrode assembly 200 is preferably inserted with case main body 110 being held such that the X axis direction (width direction of case main body 110) intersects the horizontal direction at an angle of about ±45° or less. For example, electrode assembly 200 can be inserted into case main body 110 with case main body 110 being inclined such that the upper end portion of opening 111 into which electrode assembly 200 is to be inserted is located above the upper end portion of opening 112 in the vertical direction.

The step of inserting electrode assembly 200 is not limited to pushing electrode assembly 200 from the opening 111 side, and may be performed by, for example, pulling electrode assembly 200 from the opening 112 side.

### (Connection Structure between Electrode Assembly 200 and Positive Electrode Current Collector 320)

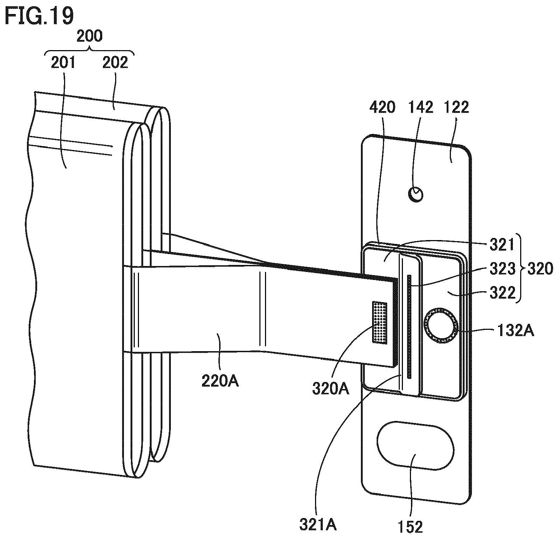

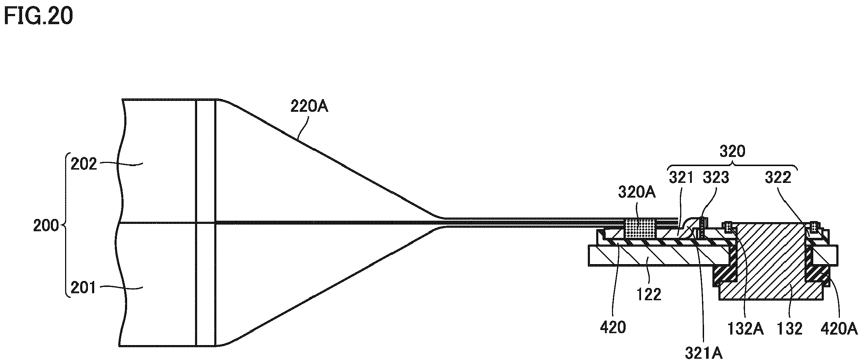

Fig. 19 is a diagram showing a connection structure between positive electrode tab group 220A and positive electrode current collector 320. Fig. 20 is a cross sectional view of the connection structure shown in Fig. 19.

As shown in Figs. 19 and 20, positive electrode current collector 320 is provided on the inner surface side of sealing plate 122, and is connected to electrode assembly 200 and positive electrode terminal 132. Positive electrode current collector 320 includes a first conductive member 321 (first component) and a second conductive member 322 (second component). First conductive member 321 and second conductive member 322 are joined to each other at a joining portion 323. Each of first conductive member 321 and second conductive member 322 is attached to the inner surface side of sealing plate 122 with an insulating member 420 composed of a resin being interposed therebetween.

First conductive member 321 has a stepped portion 321A. Stepped portion 321A extends in the long-side direction (Z axis direction) of sealing plate 122 having a rectangular shape. As shown in Fig. 20, in a region (first region) on one side (left side in Fig. 20) with respect to stepped portion 321A, first conductive member 321 is provided along sealing plate 122 and is joined to positive electrode tab group 220A (joining portion 320A). In a region (second region) on the other side (right side in Fig. 20) with respect to stepped portion 321A, first conductive member 321 is provided to overlap with second conductive member 322. These configurations are the same on the negative electrode side (see Figs. 13 to 15).

Each of Figs. 19 and 20 shows the shape of positive electrode tab group 220A before being bent; however, in secondary battery 1 completed, positive electrode tab group 220A is accommodated in case main body 110 with positive electrode tab group 220A being bent. Before electrode assembly 200 is accommodated in case main body 110, positive electrode tab group 220A is preferably bent (subjected to a bend-creating process) to reach a state close to its final shape.

Positive electrode tab group 220A is joined to first conductive member 321 of positive electrode current collector 320 at joining portion 320A. First conductive member 321 is connected to second conductive member 322 at joining portion 323. Joining portion 323 can be formed by, for example, ultrasonic bonding, resistance welding, laser welding, swaging, or the like.

Positive electrode terminal 132 is attached to sealing plate 122 with an insulating member 420A composed of a resin being interposed therebetween. Positive electrode terminal 132 is provided to be exposed to the outside of sealing plate 122 and reach second conductive member 322 of positive electrode current collector 320 provided on the inner surface side of sealing plate 122. Positive electrode terminal 132 and second conductive member 322 can be connected by ultrasonic bonding, resistance welding, laser welding, swaging, or the like, for example. In the present embodiment, positive electrode terminal 132 and second conductive member 322 are connected in the following manner: a through hole is provided in second conductive member 322, positive electrode terminal 132 is inserted into the through hole, positive electrode terminal 132 is swaged on second conductive member 322, and then the swaged portion and second conductive member 322 are welded at a joining portion 132A.

As a procedure for assembling each component, first, positive electrode terminal 132 and second conductive member 322 as well as insulating members 420, 420A are attached to sealing plate 122. Next, first conductive member 321 connected to electrode assembly 200 is attached to second conductive member 322. On this occasion, first conductive member 321 is disposed on insulating member 420 such that a portion of first conductive member 321 overlaps with second conductive member 322. Next, first conductive member 321 and second conductive member 322 are welded and connected to each other at joining portion 323. It should be noted that insulating members 420, 420A may be constituted of one member.

It should be noted that positive electrode terminal 132 may be electrically connected to sealing plate 122. Further, sealing plate 122 may serve as positive electrode terminal 132.

It should be noted that each of Figs. 19 and 20 illustrates positive electrode current collector 320 constituted of two components (first conductive member 321 and second conductive member 322); however, positive electrode current collector 320 may be constituted of one component.

### (Manufacturing Process for Secondary Battery 1)

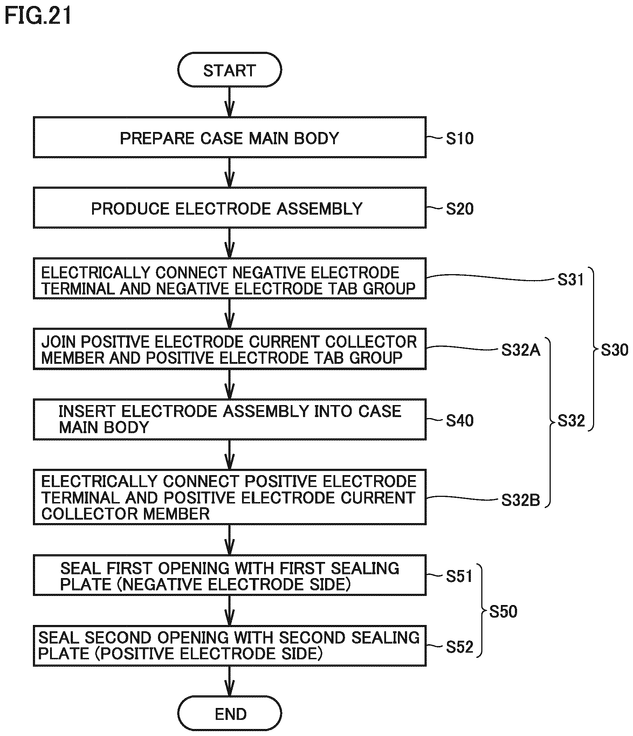

Fig. 21 is a flowchart showing each step of the method of manufacturing secondary battery 1. As shown in Fig. 21, in S10, case main body 110 is prepared. Next, in S20, electrode assembly 200 is produced. In S30, the electrode terminals provided on sealing plates 121, 122 and the electrode tab groups of electrode assembly 200 are electrically connected. In the example of Fig. 21, first, negative electrode terminal 131 and negative electrode tab group 210A are electrically connected to each other (S31), and then positive electrode terminal 132 and positive electrode tab group 220A are electrically connected to each other (S32).

When electrically connecting positive electrode terminal 132 and positive electrode tab group 220A to each other, first, first conductive member 321 of positive electrode current collector 320 and positive electrode tab group 220A are joined to each other (S32A), and then electrode assembly 200 is inserted into case main body 110 (S40). After electrode assembly 200 is inserted into case main body 110, first conductive member 311 and second conductive member 312 are joined to each other, thereby electrically connecting positive electrode terminal 132 and positive electrode tab group 220A to each other (S32B).

After the connecting (S30) of the electrode terminal and the electrode tab group and the inserting (S40) of electrode assembly 200 are completed, openings 111, 112 are respectively sealed with sealing plates 121, 122 (S50). Each of the steps of sealing with sealing plates 121, 122 is performed by, for example, laser welding.

In the present technology, the order of the connecting (S31) of negative electrode terminal 131 and negative electrode tab group 210A, the connecting (S32) of positive electrode terminal 132 and positive electrode tab group 220A, and the inserting (S40) of electrode assembly 200 is not limited to the one in the example of Fig. 21, and can be appropriately changed. For example, after the connecting (S32) of positive electrode terminal 132 and positive electrode tab group 220A is performed, the connecting (S31) of negative electrode terminal 131 and negative electrode tab group 210A may be performed.

In the example of Fig. 21, the step (S52) of sealing opening 112 with sealing plate 122 on the positive electrode side is performed after performing the step (S51) of sealing opening 111 with sealing plate 121 on the negative electrode side; however, the step (S51) of sealing opening 111 with sealing plate 121 may be performed after the step (S52) of sealing opening 112 with sealing plate 122. Further, at least parts of the steps (S51, S52) of sealing with sealing plates 121, 122 can be performed simultaneously.

### (Summary)

The above-described contents of secondary battery 1 and the method of manufacturing secondary battery 1 according to the present embodiment are summarized as follows.

As shown in Fig. 21, the method of manufacturing secondary battery 1 includes: the step (S10) of preparing case main body 110 provided with opening 111 and opening 112 facing opening 111; the step (S20) of producing electrode assembly 200 including negative electrode plate 210 and positive electrode plate 220, electrode assembly 200 having negative electrode tab group 210A located at one end portion of electrode assembly 200 and including negative electrode tabs 210B electrically connected to negative electrode plate 210, electrode assembly 200 having positive electrode tab group 220A located at the other end portion of electrode assembly 200 and including positive electrode tabs 220B electrically connected to positive electrode plate 220; the step (S30) of electrically connecting the electrode terminals and the electrode tab groups of electrode assembly 200 to each other, the electrode terminals being provided on sealing plates 121, 122; the step (S40) of inserting electrode assembly 200 into case main body 110 from the end portion side of electrode assembly 200 on the positive electrode tab group 220A side through opening 111; and the step (S50) of sealing openings 111, 112 with sealing plates 121, 122 respectively. Here, positive electrode tab group 220A is joined to first conductive member 321 of positive electrode current collector 320 (S32A), electrode assembly 200 is then inserted into case main body 110 from the end portion side of electrode assembly 200 on the positive electrode tab group 220A side through opening 111 (S40), and positive electrode terminal 132 provided on sealing plate 122 and positive electrode tab group 220A are electrically connected to each other (S32B).

In the method of manufacturing secondary battery 1 according to an example, the electrically connecting of positive electrode terminal 132 and positive electrode tab group 220A is performed by joining first conductive member 321 to second conductive member 322 provided on sealing plate 122.

In the method of manufacturing secondary battery 1 according to an example, the electrically connecting of negative electrode terminal 131 and negative electrode tab group 210A is performed by joining negative electrode tab group 210A to first conductive member 311 (third conductive member) of negative electrode current collector 310 and then joining first conductive member 311 (third conductive member) to second conductive member 312 (fourth conductive member) provided on sealing plate 121.

In the method of manufacturing secondary battery 1 according to an example, electrode assembly 200 before being inserted into case main body 110 may be covered with insulating sheet 600. It should be noted that in the present technology, insulating sheet 600 that covers electrode assembly 200 is not necessarily essential.

Secondary battery 1 according to the present embodiment includes: electrode assembly 200 provided with negative electrode tab group 210A on the sealing plate 121 side and positive electrode tab group 220A on the sealing plate 122 side; exterior package 100 (case) that accommodates electrode assembly 200; negative electrode terminal 131 (first electrode terminal) and positive electrode terminal 132 (second electrode terminal) each provided on exterior package 100; negative electrode current collector 310 (first current collector) that is accommodated in exterior package 100 and that electrically connects negative electrode tab group 210A and negative electrode terminal 131 to each other; and positive electrode current collector 320 (second current collector) that is accommodated in exterior package 100 and that electrically connects positive electrode tab group 220A and positive electrode terminal 132 to each other.

Each of negative electrode tab group 210A and positive electrode tab group 220A has a bent portion. Negative electrode tab group 210A and positive electrode tab group 220A are respectively joined to negative electrode current collector 310 and positive electrode current collector 320 at joining portions 310A, 320A located on the tip side with respect to the bent portion. In the regions in which joining portions 310A, 320A are located, first conductive members 311, 321 of negative electrode current collector 310 and positive electrode current collector 320 are disposed along sealing plates 121, 122.

### (Functions and Effects)

According to secondary battery 1 of the present embodiment, by employing the structure in which electrode assembly 200 is inserted into case main body 110 provided with openings 111, 112 facing each other and negative electrode terminal 131 and positive electrode terminal 132 are provided on sealing plates 121, 122 that seal openings 111, 112 respectively, the height of secondary battery 1 can be reduced and ease of mounting of secondary battery 1 on a vehicle can be improved.

Further, since the regions of negative electrode current collector 310 and positive electrode current collector 320 in which joining portions 310A, 320A for negative electrode tab group 210A and positive electrode tab group 220A are located are disposed along sealing plates 121, 122 respectively, the energy density of secondary battery 1 can be improved.

According to the method of manufacturing secondary battery 1 in the present embodiment, before the step (S40) of inserting electrode assembly 200 into case main body 110, positive electrode tab group 220A is joined to first conductive member 321 (S32A). Therefore, electrode assembly 200 can be inserted while suppressing unintended deformation (unintended folding or the like) of positive electrode tab group 220A located on the tip side in the insertion direction of electrode assembly 200. Therefore, secondary battery 1 can be stably and efficiently manufactured.

According to secondary battery 1 of the present embodiment, since positive electrode tab group 220A is joined to first conductive member 321 included in positive electrode current collector 320, the above-described manufacturing method can be readily performed in which positive electrode tab group 220A is joined (S32A) before the step (S40) of inserting electrode assembly 200.

Thus, according to secondary battery 1 and the method of manufacturing secondary battery 1 in the present embodiment, it is possible to stably and efficiently manufacture a secondary battery having high energy density and high reliability.

Although the embodiments of the present invention have been described and illustrated in detail, it is clearly understood that the same is by way of illustration and example only and is not to be taken by way of limitation. The scope of the present invention is defined by the terms of the claims, and is intended to include any modifications within the scope and meaning equivalent to the terms of the claims.

## Claims

1. A method of manufacturing a secondary battery, the method comprising:
preparing a case main body (110) provided with a first opening (111) and a second opening (112) facing the first opening (111);
producing an electrode assembly (200) including a first electrode (210) and a second electrode (220) having a polarity different from a polarity of the first electrode (210), the electrode assembly (200) having a first electrode tab group (210A) located at a first end portion of the electrode assembly (200) and electrically connected to the first electrode (210), the electrode assembly (200) having a second electrode tab group (220A) located at a second end portion of the electrode assembly (200) and electrically connected to the second electrode (220), the second end portion being located opposite to the first end portion;
electrically connecting a first electrode terminal (131) and the first electrode tab group (210A) to each other, the first electrode terminal (131) being provided on a first sealing plate (121);
joining the second electrode tab group (220A) to a first conductive member (321);
inserting the electrode assembly (200) into the case main body (110) from the second end portion side of the electrode assembly (200) through the first opening (111) after joining the second electrode tab group (220A) to the first conductive member (321);
electrically connecting a second electrode terminal (132) and the second electrode tab group (220A) to each other, the second electrode terminal (132) being provided on a second sealing plate (122);
sealing the first opening (111) with the first sealing plate (121) after electrically connecting the first electrode terminal (131) and the first electrode tab group (210A) to each other; and
sealing the second opening (112) with the second sealing plate (122) after electrically connecting the second electrode terminal (132) and the second electrode tab group (220A) to each other.

2. The method of manufacturing the secondary battery according to claim 1, wherein the electrically connecting of the second electrode terminal (132) and the second electrode tab group (220A) includes electrically connecting the first conductive member (321) and the second electrode terminal (132) to each other after inserting the electrode assembly (200) into the case main body (110).

3. The method of manufacturing the secondary battery according to claim 2, wherein the electrically connecting of the first conductive member (321) and the second electrode terminal (132) includes joining the first conductive member (321) to a second conductive member (322) attached to the second sealing plate (122).

4. The method of manufacturing the secondary battery according to any one of claims 1 to 3, wherein the electrically connecting of the first electrode terminal (131) and the first electrode tab group (210A) includes joining the first electrode tab group (210A) to a third conductive member (311) before inserting the electrode assembly (200) into the case main body (110).

5. The method of manufacturing the secondary battery according to claim 4, wherein the electrically connecting of the first electrode terminal (131) and the first electrode tab group (210A) includes electrically connecting the third conductive member (311) and the first electrode terminal (131) to each other before inserting the electrode assembly (200) into the case main body (110).

6. The method of manufacturing the secondary battery according to claim 5, wherein the electrically connecting of the third conductive member (311) and the first electrode terminal (131) includes joining the third conductive member (311) to a fourth conductive member (312) attached to the first sealing plate (121).

7. The method of manufacturing the secondary battery according to any one of claims 4 to 6, wherein
the first electrode tab group (210A) has a bent portion, and a tip side of the first electrode tab group (210A) with respect to the bent portion is joined to the third conductive member (311), and
a region of the third conductive member (311) joined to the first electrode tab group (210A) is disposed along the first sealing plate (121).

8. The method of manufacturing the secondary battery according to any one of claims 1 to 7, wherein
the second electrode tab group (220A) has a bent portion, and a tip side of the second electrode tab group (220A) with respect to the bent portion is joined to the first conductive member (321), and
a region of the first conductive member (321) joined to the second electrode tab group (220A) is disposed along the second sealing plate (122).

9. The method of manufacturing the secondary battery according to any one of claims 1 to 8, further comprising covering, with an electrode assembly holder (600) having an insulating property, the electrode assembly (200) before being inserted into the case main body (110).

10. A secondary battery comprising:
an electrode assembly (200) including a first electrode (210) and a second electrode (220) having a polarity different from a polarity of the first electrode (210), the electrode assembly (200) having a first electrode tab group (210A) located at a first end portion of the electrode assembly (200) and electrically connected to the first electrode (210), the electrode assembly (200) having a second electrode tab group (220A) located at a second end portion of the electrode assembly (200) and electrically connected to the second electrode (220), the second end portion being located opposite to the first end portion;
a case (100) that accommodates the electrode assembly (200);
a first electrode terminal (131) and a second electrode terminal (132) each provided on the case (100);
a first current collector (310) that is accommodated in the case (100) and that electrically connects the first electrode (210) and the first electrode terminal (131) to each other; and
a second current collector (320) that is accommodated in the case (100) and that electrically connects the second electrode (220) and the second electrode terminal (132) to each other, wherein
the case (100) includes
a case main body (110) provided with a first opening (111) and a second opening (112) facing the first opening (111),
a first sealing plate (121) that is provided with the first electrode terminal (131) and that seals the first opening (111), and
a second sealing plate (122) that is provided with the second electrode terminal (132) and that seals the second opening (112),
the first electrode tab group (210A) has a first bent portion, and a tip side of the first electrode tab group (210A) with respect to the first bent portion is joined to the first current collector (310),
the second electrode tab group (220A) has a second bent portion, and a tip side of the second electrode tab group (220A) with respect to the second bent portion is joined to the second current collector (320),
a region of the first current collector (310) joined to the first electrode tab group (210A) is disposed along the first sealing plate (121), and
a region of the second current collector (320) joined to the second electrode tab group (220A) is disposed along the second sealing plate (122).

11. The secondary battery according to claim 10, wherein
the first sealing plate (121) has a substantially rectangular shape constituted of a pair of long sides and a pair of short sides shorter than the pair of long sides,
the first current collector (310) includes a first component (311) joined to the first electrode tab group (210A), and a second component (312) that electrically connects the first component (311) and the first electrode terminal (131) to each other,
the first component (311) includes a first region, a second region, and a stepped portion formed between the first region and the second region along the pair of long sides, and
the first electrode tab group (210A) is joined to the first region, and the second region is disposed to overlap with the second component (312).

12. The secondary battery according to claim 10, wherein
the second sealing plate (122) has a substantially rectangular shape constituted of a pair of long sides and a pair of short sides shorter than the pair of long sides,
the second current collector (320) includes a first component (321) joined to the second electrode tab group (220A), and a second component (322) that electrically connects the first component (321) and the second electrode terminal (132) to each other,
the first component (321) includes a first region, a second region, and a stepped portion (321A) formed between the first region and the second region along the pair of long sides, and
the second electrode tab group (220A) is joined to the first region, and the second region is disposed to overlap with the second component (322).
